# EUROPÄISCHE PATENTSCHRIFT

(11) **EP 2 993 966 B1**
(45) Veröffentlichungstag und Bekanntmachung des Hinweises auf die Patenterteilung: **20.11.2019**
(21) Anmeldenummer: 14713470.4
(22) Anmeldetag: 28.03.2014
(51) Int. Cl.: A01D 25/00, A01B 15/06

(54) **RÜBENRODESCHAR**
BEET PULLER SHARE
SOC D'ARRACHAGE DE BETTERAVES

(30) Priorität: 10.05.2013 DE 102013104836
(43) Veröffentlichungstag der Anmeldung: 16.03.2016
(73) Patentinhaber: Betek GmbH & Co. KG, 78733 Aichhalden (DE)
(72) Erfinder: FRIEDERICHS, Heiko, 78733 Aichhalden (DE); SMEETS, Florian, 72270 Baiersbronn (DE)
(74) Vertreter: Herrmann, Jochen
(86) Internationale Anmeldenummer: PCT/EP2014/056251
(87) Internationale Veröffentlichungsnummer: WO 2014/180602

(56) Entgegenhaltungen:
- DE-A1- 4 025 016
- FR-A1- 2 378 435
- FR-A1- 2 958 493
- FR-A1- 2 971 115
- US-A- 5 119 888

## Beschreibung

Die Erfindung betrifft eine Rübenrodeschar, mit einem Basisteil, das eine Schneide aufweist, wobei im Bereich der Schneide Hartsoffelemente angeordnet sind, die an ihren Oberseiten Ableitflächen bilden, wobei die Ableitflächen in einen Flächenbereich des Basisteils übergeleitet sind und wobei dieser Flächenbereich eine Rübenführungszone, insbesondere eine Rübenausdrückzone bildet.

Solche Rübenrodeschare werden bei der Rübenernte eingesetzt. Sie sind jeweils paarweise gegeneinandergestellt an einem Werkzeugträger einer Erntemaschine montiert. Zwischen den beiden Rübenrodescharen ist ein sich verjüngender Spaltbereich gebildet. Die Rübenrodeschare schneiden beidseitig einer auszubringenden Rübe in das Erdreich ein und lösen deren Wurzelwerk. Die Rübe wird dann über den sich verjüngenden Spalt aus dem Erdreich ausgehoben. Die Rübenrodeschare bilden jeweils eine Rübenausdrückzone, an der die Rübe vollständig aus dem Boden herausgedrückt und dann in einen Vorratsbehälter gefördert wird. Bedingt durch den Schneidvorgang im Erdreich und durch das Abgleiten der Rübe auf den dafür vorgesehenen Flächenbereichen des Basisteils erfährt das Basisteil einen abrasiven Verschleiß. Es ist nun aus dem Stand der Technik bekannt im Bereich der Schneide eine Panzerung, bestehend aus Hartstoffelementen vorzusehen, um die Verschleißvorgänge einzugrenzen. Es hat sich gezeigt, dass aufgrund von Auswaschvorgängen im Übergangsbereich zwischen den Hartstoffelementen und dem Basisteil mit zunehmender Einsatzdauer scharfkantige Absätze entstehen. Hier wird die vorbeitransportierte Rübe verletzt, was sich nachteilig auf die Erntequalität auswirkt.

Es ist Aufgabe der Erfindung, ein Rübenrodeschar der eingangs erwähnten Art bereitzustellen, mit der ein verbessertes Ernteergebnis möglich ist.

Diese Aufgabe wird dadurch gelöst, dass die Hartstoffelemente als Schneidelemente ausgebildet sind, die zumindest bereichsweise die Schneide bilden. Hierdurch wird ein verbessertes Standzeitverhalten des Rübenrodeschars bewirkt. Insbesondere im stark belasteten Schneidbereich wird nun unmittelbar ein Schutz des Basisteils durch die Schneidelemente bewirkt. Die Schneidelemente können aufgrund ihrer Werkzeugeigenschaften über eine lange Einsatzdauer die Scharfkantigkeit der Schneide aufrechterhalten. Hierdurch wird insbesondere auch positiv Einfluss auf die erforderliche Maschinenleistung genommen.

Gemäß einer bevorzugten Erfindungsvariante kann es sein, dass die Ableitfläche zumindest eines Schneidelementes konvex gewölbt ist und in die konvex gewölbte Rübenführungs- insbesondere Rübenausdrückzone übergeht. Über diese Geometriegestaltung wird ein verbesserter Abfluss sowohl des Erdreiches als auch der ausgeförderten Rübe erreicht. Der Hartmetallbereich geht in den gewölbten Bereich des Basisteils über, sodass sich im Übergangsbereich ein Freiwinkel ergibt. Somit ist das Basisteil nicht mehr exponiert im Verschließbereich. Weiterhin kann auch die Gefahr von Absatzbildungen aufgrund von Auswaschvorgängen weitestgehend unterdrückt werden, sodass eine verbesserte Ernteausbringung möglich wird.

Eine denkbare Erfindungsvariante sieht vor, dass die Rübenführungszone zumindest im Bereich der Rübenausdrückzone eine Scheitellinie bildet, dass die Scheitellinie im Bereich der Rübenausdrückzone maximal 60 mm vom Ende der Arbeitsfläche des Hartstoffauftrags, insbesondere der Schneidelemente beabstandet angeordnet ist und/oder dass der Winkel zwischen der Scheitellinie und einer die Ableitflächen abschließender Verbindungslinie kleiner als 15° ist, wobei sich der Winkel in Richtung zur Rübenausdrückzone hin öffnet, oder die Scheitellinie parallel zu der Verbindungslinie mit einem Abstand kleiner als 25 mm verläuft.

Gemäß einer bevorzugten Erfindungsausgestaltung kann es vorgesehen sein, dass von dem Basisteil ein Schneidenträger zur Rückseite des Basisteils hin abgewinkelt ist. Über den abgewinkelten Schneidenträger kann der Schneidenanstellwinkel vorgegeben werden. Auf diese Weise lässt sich das Volumen des Hartstoffelementes optimiert ausbilden und damit kostengünstig gestalten.

Für die Ausbildung der Schneide ist es gemäß einer Erfindungsvariante vorteilhaft, wenn diese von einer Mehrzahl von Schneidelementen gebildet ist, die im Stoßbereich abstandsfrei aneinandergereiht sind. Mithin wird eine Segmentierung der Schneide vorgenommen. Dies führt zu einer verringerten Bruchgefahr der Schneide. Damit bleibt die Funktionsfähigkeit der Rübenrodeschar auch bei stoßartig auftretenden Belastungen, die beispielsweise auftreten, wenn unvorhergesehen ein Steinkontakt auftritt, aufrechterhalten.

Für einen verbesserten Schneideingriff kann es vorgesehen sein, dass die Reihe von Schneidelementen zumindest im Bereich eines Reihenendes mit einem Schlussstück abgeschlossen ist, welches einen bogenförmigen Schneidbereich bildet und wobei der bogenförmige Schneidbereich in die linearen Schneidbereiche des letzten anschließenden Schneidelements der Reihe von Schneidelementen übergeht. Durch diese Maßnahme wird auch eine Verschleißoptimierung bewirkt, da im Bereich der Schneidenenden ein kontinuierlicher Schneidgeometrieverlauf entsteht. Zudem dient der bogenförmige Verlauf dem Schutz der Rübe vor Verletzung beim Ausdrückvorgang.

Eine besonders bevorzugte Erfindungsvariante ist dergestalt, dass das Basisteil als Schmiedeteil ausgebildet ist und eine konvex gewölbte Oberseite sowie eine konkav gewölbte Unterseite aufweist. Auf diese Weise ergibt sich ein stabiler schalenartiger Aufbau, der mit geringem Materialaufwand gefertigt werden kann. Die Verwendung eines Schmiedeteils ermöglicht in Verbindung mit dem schalenartigen Aufbau die zuverlässige Abtragung auch unvorhergesehen großer Bearbeitungskräfte. Über den schalenartigen Aufbau kann eine elastische Nachgiebigkeit in das Werkzeugsystem eingebracht werden. Die Lastabtragung wird durch die Zähigkeit des Schmiedeteils unterstützt. Durch das Schmiedeteil kann die Materialdicke je nach Anforderung an den Verschleißbereich angepasst werden.

Weiterhin ist es denkbar, dass das Rübenrodeschar an seinem Basisteil im Bereich der Auflagefläche ein Bezeichnungsfeld aufweist. Im Montagezustand liegt die Auflagefläche auf einer Gegenfläche des Werkzeugträgers an. Damit ist das Bezeichnungsfeld vor dem Verschleißangriff geschützt. Im Wartungsfall kann das Rübenrodeschar dann einfach identifiziert und gegen ein unverschlissenes Rübenrodeschar gleichen Typs ausgetauscht werden.

Eine zuverlässige und feste Verbindung zwischen dem Schneidelement und dem Basisteil wird dann erreicht, wenn vorgesehen ist, dass das Schneidelement ein Befestigungsstück aufweist, das die Ableitfläche bildet und das mit seiner der Ableitfläche abgekehrten Unterseite mit einem Schneidenträger des Basisteils insbesondere stoffschlüssig verbunden ist. Beispielsweise kann das aus Hartmetall bestehende Schneidelement mit dem Basisteil verlötet sein.

Eine besonders verschleißgünstig ausgelegte Werkzeugkonstruktion ergibt sich auf einfache Weise dadurch, dass die konvexe Ableitfläche des Schneidelements in den ebenfalls konvex gewölbten Schneidbereich übergeht, wobei der Rundungsradius des Schneidbereichs vorzugsweise im Bereich zwischen 0,5 mm und 3,5 mm gewählt ist. Dieser Rundungsbereich ermöglicht einen scharfkantigen Bodeneingriff zugunsten einer Verringerung der erforderlichen Maschinenleistung. Zudem wird dabei eine ausreichende Sicherheit gegen Schneidenbruch geboten.

Weiterhin hat sich gezeigt, dass die Schneidelemente besonders dann auch bei rauen Einsatzbedingungen ausreichend bruchsicher sind, wenn sie in Längsrichtung des Schneidbereiches eine Erstreckung im Bereich zwischen 10 mm und 50 mm aufweisen und die Erstreckung quer zur Längsrichtung des Schneidbereiches im Bereich zwischen 20 mm und 60 mm gewählt ist.

Die Erfindung wird im Folgenden anhand eines in den Zeichnungen dargestellten Ausführungsbeispieles näher erläutert. Es zeigen:
- Figur 1: eine Rübenrodeschar in perspektivischer Frontansicht,
- Figur 2: die Rübenrodeschar gemäß Figur 1 in Frontansicht,
- Figur 3: die Rübenrodeschar gemäß den Figuren 1 und 2 in Ansicht von hinten,
- Figur 4: ein Schneidelement des Rübenrodeschars gemäß den Figuren 1 bis 3 in perspektivischer Darstellung,
- Figur 5: das Schneidelement gemäß Figur 4 in Seitenansicht,
- Figur 6: die Rübenrodeschar gemäß Figur 2 in Ansicht von links und
- Figur 7: ein in Figur 6 mit VII markiertes Detail in vergrößerter Darstellung.

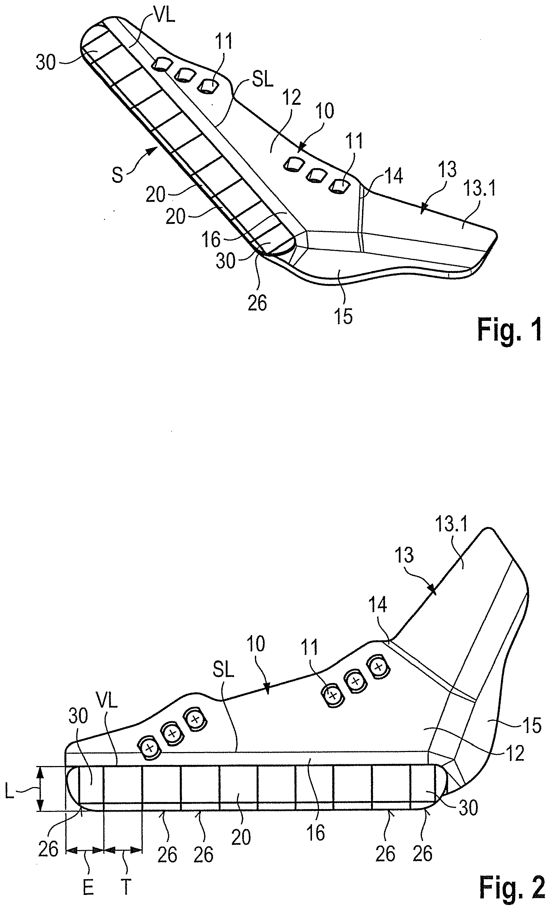

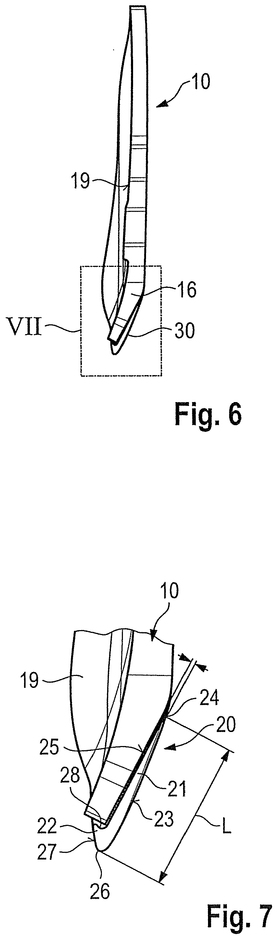

Figur 1 zeigt eine Rübenrodeschar mit einem Basisteil 10, das als Schmiedeteil aus einem Stahlwerkstoff gefertigt ist. Das Basisteil 10 ist in einem Befestigungsbereich mit zwei Reihen von Befestigungsaufnahmen 11 versehen. Die Befestigungsaufnahmen 11 jeder Reihe sind zueinander in gleicher Teilung beabstandet angeordnet. Im Bereich einer längsseitigen Kante des Basisteils 10 ist ein Schneidenträger 16 vorgesehen. Dieser ist zur Rückseite des Basisteils 10 hin abgewinkelt, insbesondere mit einem großen Radius abgebogen. Der Schneidenträger 16 ist mit einer Reihe von Schneidelementen 20 belegt. Die Schneidelemente 20 bestehen aus einem Hartwerkstoff, insbesondere aus einem Hartmetall oder einem Keramikmaterial. Um eine einheitliche Auflagefläche für die Schneidelemente 20 zu bieten, ist der Schneidenträger 16 mit einem flächigen Absatz versehen, wie dies die Figur 7 erkennen lässt. Figur 1 lässt weiter erkennen, dass die Reihe von Schneidelementen 20 an ihren beiden längsseitigen Enden mit Schlussstücken 30 ausgerüstet ist.

Das Basisteil 10 bildet im Anschluss an den Schneidenträger 16 einen Rübenführungsbereich mit einer Rübenausdrückzone 12. Im Bereich der Rübenausdrückzone 12 ist das Basisteil 10 konvex gewölbt. Vorliegend ist eine ballige Ausbauchung verwendet. Im Anschluss an die Rübenausdrückzone 12 geht das Basisteil 10 über einen absatzartigen Übergangsabschnitt 14 in einen Ansatz 13 über. Der Ansatz 13 bildet eine Führungsfläche 13.1. Im Übergangsbereich zwischen der Reihe von Schneidelementen 20 und dem Ansatz 13 ist eine abgewinkelte Schrägfläche 15 vorgesehen.

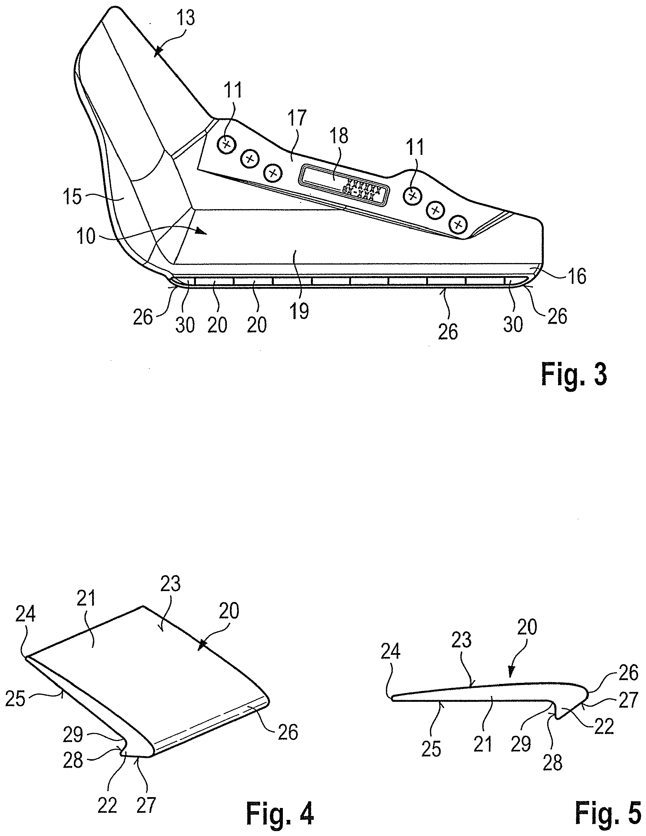

Unter Bezugnahme auf Figur 4 und 5 wird nachfolgend die Gestaltung der Schneidelemente 20 näher erläutert. Wie diese Darstellungen zeigen, weisen die Schneidelemente 20 ein Befestigungsstück 21 auf. Dieses bildet auf seiner Oberseite eine konvex gewölbte Ableitfläche 23. Die der Ableitfläche 23 abgewandte Unterseite 25 des Schneidelementes 20 ist eben ausgebildet. Die Ableitfläche 23 geht in den konvexen Schneidbereich 26 über, der linear ausgebildet ist. An das Befestigungsstück 21 ist einteilig ein Ansatz 22 angeformt, der rückseitig über die Unterseite 25 vorsteht. Dieser Ansatz 22 ist im Anschluss an den gerundeten Schneidbereich 26 mit einer Freifläche 27 versehen. Die Freifläche 27 geht winkelig in eine Stützfläche 28 über. Die Stützfläche 28 wiederum geht über einen Rundungsübergang 29 in die Unterseite 25 über. Die Unterseite 25 ist über einen gerundeten Endabschnitt 24 in die Ableitfläche 23 überführt.

Wie Figur 2 erkennen lässt, sind eine Vielzahl von baugleichen Schneidelementen 20 auf den Schneidenträger 16 aufgesetzt und abstandsfrei aneinandergereiht. Die Schneidelemente 20 weisen in Richtung ihrer Schneidbereiche 26 alle die gleiche Längserstreckung T auf. Quer zur Längserstreckung T ist die Baulänge der Ableitfläche 23 in Figur 2 mit dem Maß L angegeben.

Wie bereits vorstehend erwähnt wurde, ist die Reihe von Schneidelementen 20 an ihren längsseitigen Enden mit Schlussstücken 30 abgeschlossen. Die Schlussstücke 30 weisen prinzipiell die gleiche Bauweise wie die Schneidelemente 20 auf und umfassen demnach ein Befestigungsstück 21 mit einem Ansatz 22 und konvex gewölbten Ableitflächen 23. Sie besitzen einen gerundeten Endabschnitt 24 und eine ebene Unterseite 25 mit der sie auf den Schneidenträger 16 aufgelegt sind. Der Ansatz 22 bildet einen Schneidbereich 26 und eine Freifläche 27. Weiterhin umfasst der Ansatz 22 eine Stützfläche 28, die über einen Rundungsübergang 29 in die Unterseite 25 übergeleitet ist. Im Unterschied zu den vorbeschriebenen Schneidelementen 20 ist, wie Figur 2 deutlich erkennen lässt, der Schneidbereich 26 der Schlussstücke 30 nun nicht linear ausgebildet, sondern weist einen zumindest teilweise konvexen bogenförmigen Verlauf auf. Dieser konvexe Verlauf des Schneidbereiches 26 ist in den linearen Schneidbereich 26 des anschließenden Schneidelementes 20 absatzlos übergeleitet.

In den Figuren 6 und 7 ist die Zuordnung der Schlussstücke 30 zu dem Basisteil 10 näher erkennbar. Wie diese Darstellung zeigt, sind die Schlussstücke 30 mit ihren Unterseiten 25 und den Stützflächen 28 unter Zwischenlage einer stoffschlüssigen Verbindung, insbesondere eines Lotmateriales auf entsprechende Gegenflächen des Basisteils 10 aufgesetzt und mit diesem hier verbunden. Die Befestigung der Schneidelemente 20 erfolgt in analoger Weise. Auch hier sind die Schneidelemente 20 mit den Unterseiten 25 und den Stützflächen 28 mit dem Basisteil verlötet. Im Montagezustand sind die konvexen Ableitflächen 23 der Schneidelemente 20 und der Endstücke 30 absatzlos in die anschließenden Führungsbereiche des Basisteils 10 übergeleitet. Dabei sind die Führungsbereiche des Basisteils 10 ebenfalls konvex ausgebildet. Figur 1 lässt erkennen, dass der in Vorschubrichtung hintere Teil der Reihe von Schneidelementen 20 mit ihren Ableitflächen 23 in die konvexe Rübenausdrückzone 12 überführt sind.

Aus den Figuren 6 und 7 lässt sich auch deutlich der schalenartige Aufbau des Rübenrodeschars erkennen. Demgemäß ist die Rübenrodeschar mit einer unterseitigen konkav gemuldeten Innenfläche 19 versehen und gegenüberliegend auf der Außenseite konvex ausgewölbt.

Figur 3 gibt die Rückansicht der Rübenrodeschars deutlich zu erkennen. Wie diese Darstellung veranschaulicht, sind sowohl die Schrägfläche 15 als auch der Schneidenträger 16 gegenüber dem Basisteil 10 zur Rückseite hin abgewinkelt. Im Bereich der Rückseite der Rübenrodeschar ist eine Befestigungsfläche 17 vorgesehen. In diese Befestigungsfläche 17 münden die Befestigungsaufnahmen 11. Dabei ist die Befestigungsfläche 17 derart im Raum ausgerichtet, dass sie im Winkel gleich 90° zu den Mittellängsachsen der Befestigungsaufnahmen 11 steht.

Zur Befestigung der Rübenrodeschar wird diese mit ihrer Befestigungsfläche 17 auf eine Gegenfläche eines Werkzeugträgers aufgelegt. Nun wird unter Verwendung jeweils einer Befestigungsaufnahme 11 der Reihen von Befestigungsaufnahmen 11 die Rübenrodeschar mit dem Werkzeugträger verschraubt. Dabei ergibt sich ein definierter Anstellwinkel der Rübenrodeschar gegenüber dem Werkzeugträger. Soll nun die Zuordnung variiert werden, so wird die Rübenrodeschar gegenüber dem Werkzeugträger verschoben und dann unter Verwendung einer der nächsten Befestigungsaufnahmen 11 der Reihen von Befestigungsaufnahmen 11 mit dem Werkzeugträger verschraubt. Mit dieser einfachen Maßnahme kann die Rübenrodeschar bezüglich ihrer Ausrichtung auf die jeweiligen Erfordernisse angepasst werden.

Im Bereich der Befestigungsfläche 17 ist ein Bezeichnungsfeld 18 vorgesehen, auf dem die Type der Rübenrodeschar markiert ist. Beispielsweise kann das Bezeichnungsfeld 18 eine stempelartige Einprägung sein.

## Patentansprüche

1. Rübenrodeschar mit einem Basisteil (10), das eine Schneide (5) aufweist, wobei im Bereich der Schneide (5) ein Hartstoffauftrag angeordnet ist, der an seiner Oberseite eine oder mehrere Ableitflächen (23) aufweist,
wobei die Ableitfläche(n) (23) in einen Flächenbereich des Basisteils (10) übergeleitet sind,
und wobei dieser Flächenbereich eine Rübenführungszone, insbesondere eine Rübenausdrückzone (12) bildet,
**dadurch gekennzeichnet,**
**dass** der Hartstoffauftrag Hartstoffelemente aufweist, die als Schneidelemente (20) ausgebildet sind, und die zumindest bereichsweise die Schneide (S) bilden,
und **dass** die Ableitfläche (23) zumindest eines Schneidelementes (20) konvex gewölbt ist und mittelbar oder unmittelbar in die konvex gewölbte Rübenführungs- insbesondere Rübenausdrückzone (12) übergeht.

2. Rübenrodeschar nach Anspruch 1,
**dadurch gekennzeichnet,**
**dass** die Rübenführungszone zumindest im Bereich der Rübenausdrückzone (12) eine Scheitellinie (SL) bildet,
**dass** die Scheitellinie (SL) im Bereich der Rübenausdrückzone (12) maximal 60mm von der Ableitfläche (23) des Hartstoffauftrags, insbesondere der Schneidelemente (20) beabstandet angeordnet ist und/oder dass der Winkel zwischen der Scheitellinie (SL) und einer die Ableitflächen (23) abschließenden Verbindungslinie (VL) kleiner als 15° ist, wobei sich der Winkel in Richtung zur Rübenausdrückzone (12) hin öffnet, oder die Scheitellinie (SL) parallel zu der Verbindungslinie (VL) mit einem Abstand kleiner als 25 mm verläuft. X.

3. Rübenrodeschar nach einem der Ansprüche 1 oder 2,
**dadurch gekennzeichnet,**
**dass** von dem Basisteil (10) ein Schneidenträger (16) zur Rückseite des Basisteils (10) abgewinkelt ist.

4. Rübenrodeschar nach einem der Ansprüche 1 bis 3,
**dadurch gekennzeichnet,**
**dass** die Schneide (S) von einer Mehrzahl von Schneidelementen (20) gebildet ist, die im Stoßbereich abstandsfrei aneinandergereiht sind.

5. Rübenrodeschar nach Anspruch 4,
**dadurch gekennzeichnet,**
**dass** die Reihe von Schneidelementen (20) zumindest im Bereich eines Reihenendes mit einem Schlussstück (30) abgeschlossen ist, das einen bogenförmigen Schneidbereich (26) bildet und
wobei der bogenförmige Schneidebereich (26) in die linearen Schneidebereiche (26) des letzten anschließenden Schneidelements (20) der Reihe von Schneidelementen (20) übergeht.

6. Rübenrodeschar nach einem der Ansprüche 1 bis 5,
**dadurch gekennzeichnet,**
**dass** das Basisteil (10) als Schmiedeteil ausgebildet ist und eine konvex gewölbte Oberseite sowie eine konkav gewölbte Unterseite aufweist.

7. Rübenrodeschar nach einem der Ansprüche 1 bis 6,
**dadurch gekennzeichnet,**
**dass** das Basisteil (10) im Bereich der Befestigungsfläche (17) ein Bezeichnungsfeld (18) aufweist.

8. Rübenrodeschar nach einem der Ansprüche 1 bis 7,
**dadurch gekennzeichnet,**
**dass** das Schneidelement (20) ein Befestigungsstück (21) aufweist, das die Ableitfläche (23) bildet und das mit seiner der Ableitfläche (23) abgekehrten Unterseite (25) mit einem Schneidenträger (16) des Basisteils (10) insbesondere stoffschlüssig verbunden ist.

9. Rübenrodeschar nach einem der Ansprüche 1 bis 8,
**dadurch gekennzeichnet,**
**dass** das Befestigungsstück (21) des Schneidelements (20) einen Ansatz (22) aufweist, der die Schneide (26) bildet und zumindest bereichsweise über die Unterseite (25) des Befestigungsstücks (21) vorsteht.

10. Rübenrodeschar nach einem der Ansprüche 1 bis 9,
**dadurch gekennzeichnet,**
**dass** die konvexe Ableitfläche (23) des Schneidelements (20) in den ebenfalls konvex gewölbten Schneidbereich (26) übergeht,
wobei der Rundungsradius des Schneidbereichs (26) vorzugsweise im Bereich zwischen 0,5 mm und 3,5 mm beträgt.

11. Rübenrodeschar nach einem der Ansprüche 1 bis 9,
**dadurch gekennzeichnet,**
**dass** die Erstreckung des Schneidelemtes (20) in Längsrichtung des Schneidbereichs (26) im Bereich zwischen 10 mm und 50 mm (T) beträgt und/oder die Erstreckung quer zur Längsrichtung des Schneidbereichs (26) im Bereich zwischen 20 mm und 60 mm (L) beträgt.

## Claims

1. Beet puller share having a base part (10) which has a blade (5), wherein a hard-material coating is arranged in the region of the blade (5) and has one or more deflecting surfaces (23) on its upper side,
wherein the deflecting surface(s) (23) transition(s) into a surface region of the base part (10),
and wherein this surface region forms a beet guide zone, in particular a beet ejection zone (12),
**characterised in that**
the hard-material coating has hard-material elements which are designed as cutting elements (20) and which form the blade (S) at least in some regions,
and **in that** the deflecting surface (23) of at least one cutting element (20) is convex and merges indirectly or directly into the convex beet guide zone, in particular the beet ejection zone (12).

2. Beet puller share according to claim 1,
**characterised in that**
the beet guide zone forms a crown line (SL) at least in the region of the beet ejection zone (12),
**in that** the crown line (SL) is arranged at a maximum distance of 60 mm from the deflecting surface (23) of the hard-material coating, in particular of the cutting elements (20), in the region of the beet ejection zone (12), and/or **in that** the angle between the crown line (SL) and a connecting line (VL) terminating the deflecting surfaces (23) is less than 15°, wherein the angle opens in the direction of the beet ejection zone (12), or the crown line (SL) extends in parallel with the connecting line (VL) at a distance of less than 25 mm. X.

3. Beet puller share according to claim 1 or 2,
**characterised in that**
a blade carrier (16) is angled from the base part (10) towards the back of the base part (10).

4. Beet puller share according to any of claims 1 to 3,
**characterised in that**
the blade (S) is formed of a plurality of cutting elements (20) which are lined up in the joint region without spacing.

5. Beet puller share according to claim 4,
**characterised in that**
the row of cutting elements (20) is terminated, at least in the region of one row end, by an end piece (30) which forms a curved cutting region (26) and
wherein the curved cutting region (26) runs into the linear cutting regions (26) of the last adjoining cutting element (20) of the row of cutting elements (20).

6. Beet puller share according to any of claims 1 to 5,
**characterised in that**
the base part (10) is designed as a forged part and has a convex upper side and a concave underside.

7. Beet puller share according to any of claims 1 to 6,
**characterised in that**
the base part (10) has a labelling field (18) in the region of the attachment surface (17).

8. Beet puller share according to any of claims 1 to 7,
**characterised in that**
the cutting element (20) has an attachment piece (21) which forms the deflecting surface (23) and which is connected, by its underside (25) facing away from the deflecting surface (23), to a blade carrier (16) of the base part (10), in particular in an integrally bonded manner.

9. Beet puller share according to any of claims 1 to 8,
**characterised in that**
the attachment piece (21) of the cutting element (20) has a projection (22) which forms the blade (26) and projects at least in some regions beyond the underside (25) of the attachment piece (21).

10. Beet puller share according to any of claims 1 to 9,
**characterised in that**
the convex deflecting surface (23) of the cutting element (20) merges into the likewise convex cutting region (26),
wherein the radius of curvature of the cutting region (26) is preferably in the range between 0.5 mm and 3.5 mm.

11. Beet puller share according to any of claims 1 to 9,
**characterised in that**
the extension of the cutting element (20) in the longitudinal direction of the cutting region (26) is in the range between 10 mm and 50 mm (T) and/or the extension transverse to the longitudinal direction of the cutting region (26) is in the range between 20 mm and 60 mm (L).

## Revendications

1. Soc d'arrachage de betteraves comportant une partie de base (10) qui présente une arête de coupe (5), un dépôt de matériau dur étant appliqué dans la zone de l'arête de coupe (5), lequel dépôt de matériau dur présente une ou plusieurs faces de déversement (23) sur sa face supérieure,
la ou les faces de déversement (23) étant une transition vers une région de surface de la partie de base (10),
et cette zone de surface formant une zone de guidage de betteraves, en particulier une zone d'éjection de betteraves (12),
**caractérisé en ce que**
le dépôt de matériau dur comporte des éléments en matériau dur, qui sont conçus comme éléments de coupe (20) et qui forment l'arête de coupe (S) au moins par endroits,
et **en ce que** la face de déversement (23) d'au moins un élément de coupe (20) est incurvée de manière convexe et devient indirectement ou directement la zone de guidage de betteraves incurvée de manière convexe, en particulier la zone d'éjection de betteraves (12).

2. Soc d'arrachage de betteraves selon la revendication 1,
**caractérisé en ce que**
la zone de guidage de betteraves forme une ligne de sommet (SL) au moins dans la région de la zone d'éjection de betteraves (12),
**en ce que** la ligne de sommet (SL) est disposée à une distance maximale de 60 mm de la face de déversement (23) du dépôt de matériau dur, en particulier des éléments de coupe (20), dans la région de la zone d'éjection de betteraves (12), et/ou **en ce que** l'angle entre la ligne de sommet (SL) et une ligne de liaison (VL) terminant les faces de déversement (23) est inférieur à 15°, l'angle s'ouvrant en direction de la zone d'éjection de betteraves (12) ou la ligne de sommet (SL) s'étendant parallèlement à la ligne de liaison (VL) à une distance inférieure à 25 mm. X.

3. Soc d'arrachage de betteraves selon l'une quelconque des revendications 1 ou 2,
**caractérisé en ce que**
un support de tranchant (16) est incliné de la partie de base (10) vers l'arrière de la partie de base (10).

4. Soc d'arrachage de betteraves selon l'une quelconque des revendications 1 à 3,
**caractérisé en ce que**
l'arête de coupe (S) est formée par une pluralité d'éléments de coupe (20) qui sont alignés sans espacement dans la zone d'assemblage.

5. Soc d'arrachage de betteraves selon la revendication 4,
**caractérisé en ce que**
la rangée d'éléments de coupe (20) est terminée, au moins dans la région d'une extrémité de rangée, par une pièce d'extrémité (30), qui forme une région de coupe arquée (26) et
la région de coupe arquée (26) devenant les régions de coupe linéaires (26) du dernier élément de coupe adjacent (20) de la série des éléments de coupe (20).

6. Soc d'arrachage de betteraves selon l'une quelconque des revendications 1 à 5,
**caractérisé en ce que**
l'élément de base (10) est réalisé sous la forme d'une pièce forgée et présente une face supérieure incurvée de manière convexe et une face inférieure incurvée de manière concave.

7. Soc d'arrachage de betteraves selon l'une quelconque des revendications 1 à 6,
**caractérisé en ce que**
la partie de base (10) présente un champ de désignation (18) dans la zone de la surface de fixation (17).

8. Soc d'arrachage de betteraves selon l'une quelconque des revendications 1 à 7,
**caractérisé en ce que**
l'élément de coupe (20) présente une pièce de fixation (21) qui forme la face de déversement (23) et qui, avec sa face inférieure (25) opposée à la face de déversement (23), est reliée à un support de tranchant (16) de la partie de base (10), en particulier par liaison de matière.

9. Soc d'arrachage de betteraves selon l'une quelconque des revendications 1 à 8,
**caractérisé en ce que**
la pièce de fixation (21) de l'élément de coupe (20) présente une saillie (22) qui forme l'arête de coupe (26) et dépasse au moins par endroits au-delà de la face inférieure (25) de la pièce de fixation (21).

10. Soc d'arrachage de betteraves selon l'une quelconque des revendications 1 à 9,
**caractérisé en ce que**
la face de déversement convexe (23) de l'élément de coupe (20) devient la zone de coupe (26) également incurvée de manière convexe,
le rayon de courbure de la zone de coupe (26) étant de préférence compris entre 0,5 mm et 3,5 mm.

11. Soc d'arrachage de betteraves selon l'une quelconque des revendications 1 à 9,
**caractérisé en ce que**
l'étendue de l'élément de coupe (20) dans la direction longitudinale de la zone de coupe (26) est comprise entre 10 mm et 50 mm (T) et/ou l'étendue transversale à la direction longitudinale de la zone de coupe (26) est comprise entre 20 mm et 60 mm (L).
